# EUROPÄISCHE PATENTANMELDUNG

(11) **EP 3 287 053 A1**
(43) Veröffentlichungstag der Anmeldung: **28.02.2018**
(21) Anmeldenummer: 17185739.4
(22) Anmeldetag: 10.08.2017
(51) Int. Cl.: A47J 43/044, A47J 43/07

(54) **VERSCHMUTZUNGSSCHUTZ FÜR EINE KÜCHENMASCHINE**

(30) Priorität: 26.08.2016 DE 102016216104
(71) Anmelder: BSH Hausgeräte GmbH, 81739 München (DE)
(72) Erfinder: Decman, Igor, 3232 Ponikva (SI); Strojansek, Aleksander, 3331 Nazarje (SI); Brecko, Ales, 3000 Celje (SI)

(57) **Zusammenfassung**

Ein erfindungsgemäßer Schmutzschutzkragen (10) dient dem Schutz einer Einstecköffnung einer Küchenmaschine für ein Bearbeitungswerkzeug (100, 200). Er ist mindestens in einem Abschnitt trichterartig ausgebildet und dazu eingerichtet, eine Antriebsstange (30, 30') des Bearbeitungswerkzeugs verdreh- und/oder verschwenkbar zu umgeben.

Ein erfindungsgemäßes Bearbeitungswerkzeug (100, 200) für eine Küchenmaschine umfasst eine Antriebsstange 30, 30' und einen Schmutzschutzkragen (10). Eine erfindungsgemäße Küchenmaschine (1) umfasst mindestens ein Bearbeitungswerkzeug (100, 200) und eine Einstecköffnung (2) für das mindestens eine Bearbeitungswerkzeug.

## Beschreibung

Die vorliegende Erfindung betrifft einen Schmutzschutzkragen für ein Bearbeitungswerkzeug einer Küchenmaschine, ein Bearbeitungswerkzeug mit Schmutzschutzkragen zum Anschluss an eine Küchenmaschine und eine Küchenmaschine mit einem Bearbeitungswerkzeug, das einen Schmutzschutzkragen aufweist.

Eine Vielzahl von Bearbeitungswerkzeugen, die zum Bearbeiten von Lebensmitteln an eine geeignete Küchenmaschine angeschlossen werden können, umfasst jeweils mindestens einen Bearbeitungsabschnitt, der dazu eingerichtet ist, das jeweilige Lebensmittel zu rühren, zu passieren, zu zerkleinern oder dergleichen, und eine Antriebsstange mit einem Einsteck-Ende, das dazu eingerichtet ist, in eine vorgesehene Einstecköffnung der Küchenmaschine eingesteckt und so durch einen Elektromotor der Küchenmaschine angetrieben zu werden. Zum Reinigen der Bearbeitungswerkzeuge kann das Einsteck-Ende der Antriebsstange dann von der Küchenmaschine wieder gelöst werden.

Im Betrieb eines Bearbeitungswerkzeugs werden häufig Spritzer, Stücke oder Partikel des jeweils bearbeiteten Lebensmittels aufgeschleudert. Um zu vermeiden, dass auf diese Weise Teile des Lebensmittels in die genannte Einstecköffnung eintreten und so den Anschluss oder sogar das Getriebe verschmutzen, weisen bekannte Bearbeitungswerkzeuge einen Schmutzschutzschild auf, der zwischen dem Bearbeitungsabschnitt und dem Einsteck-Ende der Antriebsstange an dieser befestigt ist.

Derartige Schmutzschutzschilde sind verdrehfest mit der Antriebsstange verbunden. Wenn die Küchenmaschine dazu eingerichtet ist, die Ausrichtung der Antriebsstange im Betrieb zu ändern, beispielsweise so, dass während einer Rotation um eine erste Rotationsachse diese selbst um eine zweite, zur ersten geneigte Rotationsachse rotiert, müssen die jeweils verwendeten Schmutzschutzschilde entsprechend von der Oberfläche beabstandet sein, damit sie nicht mit dieser Oberfläche kollidieren. Dadurch haben die Schmutzschutzschilde den Nachteil, dass Spritzer oder Partikel bei einer ungünstigen Flugbahn am Schmutzschutzschild vorbei dennoch an die küchenmaschinenseitige Einstecköffnung für das Einsteck-Ende geraten und dieses somit verschmutzen können.

Die vorliegende Erfindung hat die Aufgabe, eine verbesserte Technik bereitzustellen, mit der eine Einstecköffnung einer Küchenmaschine im Betrieb effizient vor dem Eindringen von Verschmutzungen geschützt werden kann.

Die Aufgabe wird gelöst durch einen Schmutzschutzkragen gemäß Anspruch 1, ein Bearbeitungswerkzeug gemäß Anspruch 4 und eine Küchenmaschine gemäß Anspruch 9. Vorteilhafte Ausführungsformen sind in den Unteransprüchen, der Beschreibung und den Figuren offenbart.

Ein erfindungsgemäßer Schmutzschutzkragen dient dazu, eine Einstecköffnung für ein Bearbeitungswerkzeug an einer Küchenmaschine vor Verschmutzung zu schützen. Ein derartiges Bearbeitungswerkzeug kann beispielsweise ein Schneebesen, ein Knethaken, ein Pürierelement, ein Stampfer, ein Schneid- oder Mahlwerkzeug oder ähnliches sein, und die Küchenmaschine kann dazu eingerichtet sein, das Bearbeitungswerkzeug in einfacher Rotation (um eine feste Rotationsachse) oder in mehrfacher Rotation (mit mindestens einer wiederum rotierenden Rotationsachse), in exzentrischer Bewegung (z.B. entlang einer Ellipse oder eines Dreiecks), in einer Verschwenkung (hin und her), in linearer Bewegung (z.B. weiter in die Küchenmaschine hinein und wieder aus ihr heraus) und/oder in einer oder mehreren Kombination/en dieser Bewegungen anzutreiben (vorzugsweise jeweils gemäß einer ausgewählten Einstellung der Küchenmaschine).

Der erfinderische Schmutzschutzkragen ist mindestens in einem Abschnitt trichterartig ausgebildet und dazu eingerichtet ist, eine Antriebsstange des Bearbeitungswerkzeugs verdreh- und/oder verschwenkbar zu umgeben; insbesondere bildet der Schmutzschutzkragen somit einen Durchlass für die Antriebsstange aus, in dem diese relativ zum Schmutzschutzkragen verdreht (also rotiert) und/oder verschwenkt werden kann.

In einem Zustand, in dem die Antriebsstange in dieser Weise durch den Schmutzschutzkragen (bzw. dessen Durchlass) führt, ist sie aufgrund der trichterartigen Form auch dann relativ zum Schmutzschutzkragen verschwenk- bzw. verdrehbar, wenn der Schmutzschutzkragen an einer Oberfläche der Küchenmaschine gehalten wird, insbesondere an einer Oberfläche, die eine Einstecköffnung umgibt, in die das Einsteck-Ende des Bearbeitungswerkzeugs eingesteckt ist: Die trichterartige Form bietet nämlich in ihrem Inneren der gesteckten Antriebsstange eines Bearbeitungswerkzeugs Raum auch bei einer sich ändernden Neigung. Damit kann der Schmutzschutzkragen auch dann vorteilhaft dicht an der Oberfläche der Küchenmaschine gehalten werden, wenn die Ausrichtung der Antriebsstange von der Küchenmaschine geändert wird, das Bearbeitungswerkzeug also beispielsweise verschwenkt oder entlang einer Kegelmantelfläche geführt (rotiert) wird.

Vorzugsweise verengt sich der Durchlass für die Antriebsstange mindestens in einem Bereich des trichterartigen Abschnitts streng monoton. Beispielsweise kann der Schmutzschutzkragen in einem derartigen Abschnitt eine Wandung aufweisen, die z.B. entlang einem Abschnitt einer Kegelmantelfläche oder eines Ellipsoids (insbesondere einer Kugel) verläuft.

Gemäß einer vorteilhaften Ausführungsform ist ein erfindungsgemäßer Schmutzschutzkragen mindestens teilweise aus (vorzugsweise starrem) Kunststoff gefertigt, beispielsweise in einem Spritzgussverfahren. Ein derartiger Schmutzschutzkragen ist auf einfache Weise herzustellen und besonders leicht.

Gemäß einer vorteilhaften Ausführungsform weist ein erfindungsgemäßer Schmutzschutzkragen einen ersten und einen zweiten Rand auf. Der erste Rand ist dabei vorzugsweise dazu eingerichtet, im Wesentlichen an einer Oberfläche der Küchenmaschine anzuliegen, so dass also der erste Rand im Wesentlichen zwischenraumfrei entlang der Oberfläche verlaufen kann. Insbesondere ist der erste Rand vorzugsweise kreisförmig ausgebildet. Alternativ oder zusätzlich kann der erste Rand einen Durchmesser (also einen größtmöglichen Abstand zweier auf dem Rand liegender Punkte) aufweisen, der mindestens doppelt so groß, bevorzugt mindestens 2,5mal so groß ist wie ein Durchmesser des zweiten Randes. Damit wird eine besonders günstige Trichterform realisiert. Der zweite Rand kann beispielsweise einen Durchmesser haben, der mit einem (radialen) Durchmesser der Antriebsstange eines zu verwendenden Bearbeitungswerkzeugs im Wesentlichen übereinstimmt (beispielsweise höchstens 2mm größer ist als der Durchmesser der Antriebsstange). Alternativ kann der zweite Rand einen Durchmesser aufweisen, der mindestens 0,5cm, bevorzugter mindestens 1 cm oder mindestens 1,5cm beträgt. Ein derartiger Schmutzschutzkragen eignet sich besonders zur Verwendung mit einem Bearbeitungswerkzeug, das ein entsprechendes Verdickungselement aufweist, wie es weiter unten beschrieben ist.

Ein erfindungsgemäßer Schmutzschutzkragen kann dazu vorgesehen sein, im Betrieb im Kontakt mit einem entsprechenden Element (beispielsweise mit einem weiter unten beschriebenen Verdickungselement einer Antriebsstange) in einer vorgesehenen Betriebsposition gehalten zu werden und ggf. infolge des Kontakts von der Antriebsstange mitbewegt zu werden, beispielsweise mit ihr zu rotieren.

Alternativ kann der Schmutzschutzkragen dazu eingerichtet sein, an der Küchenmaschine lösbar befestigt zu werden, beispielsweise an einer (vorzugsweise eine Einstecköffnung für das Bearbeitungswerkzeug umgebenden) Oberfläche der Küchenmaschine; in diesem Falle kann dazu ein (erster) Rand des Schmutzschutzkragens beispielsweise mindestens ein Befestigungsmittel aufweisen. Ein solches Befestigungsmittel kann ggf. dazu eingerichtet sein, mit einem entsprechenden Gegenelement an der Küchenmaschine zusammenzuwirken; es kann beispielsweise einen Klemmrand mit einem flexiblen und/oder elastischen Material, eine Einschiebeschiene und/oder ein Gewinde umfassen.

Eine solche Ausführungsform eines erfindungsgemäßen Schmutzschutzkragens kann besonders effektiv verhindern, dass vom Bearbeitungswerkzeug aufgeschleudertes Lebensmittel zwischen ihn und die Oberfläche der Küchenmaschine, insbesondere in eine von der Oberfläche umgebene Einstecköffnung dringt.

In einer vorteilhaften Ausführungsvariante weist ein erfindungsgemäßer Schmutzschutzkragen einen Griff auf, an dem der Schmutzschutzkragen vorteilhaft gehalten werden kann. Der Griff kann insbesondere in Form einer Lasche ausgebildet sein.

Gemäß einer bevorzugten Ausführungsform umfasst ein Schmutzschutzkragen zudem an einer inneren (also der Küchenmaschine zugewandten bzw. bei Befestigung zuzuwendenden) Oberfläche eine Rippe, die sich an einer dem Griff gegenüberliegenden Seite des Durchlasses für die Antriebstange keilartig erhebt.

Im Zusammenspiel mit einem geeigneten Bearbeitungswerkzeug, das ein Verdickungselement wie weiter unten beschrieben aufweist, ermöglicht diese Ausführungsform ein besonders einfaches Abnehmen des (ggf. zuvor aus einer Verklemmung gelösten) Bearbeitungswerkzeugs von der Küchenmaschine: Griff und Rippe bilden dabei einen Hebel aus, wobei das Verdickungselement als Hebelachse dient. Wird nun der Griff mit ausreichender Kraft von der Oberfläche der Küchenmaschine abgezogen, drückt die Rippe gegen diese Oberfläche, bis das Verdickungselement als Hebelachse nachgibt und somit das Einsteck-Ende der Antriebsstange aus der Einstecköffnung gezogen wird.

Ein erfindungsgemäßes Bearbeitungswerkzeug für eine Küchenmaschine umfasst eine Antriebsstange und einen erfindungsgemäßen Schmutzschutzkragen gemäß einer der in dieser Schrift offenbarten Ausführungsformen; der Schmutzschutzkragen umgibt also die Antriebsstange des Bearbeitungswerkzeugs (lösbar oder beständig) verdreh- und/oder verschwenkbar, oder er ist zumindest dazu eingerichtet (bei geeigneter Positionierung) die Antriebsstange des Bearbeitungswerkzeugs derart zu umgeben.

Beispielsweise kann das Bearbeitungswerkzeug ein Rotationswerkzeug, also dazu eingerichtet sein, (insbesondere) um die (dann als Welle zu bezeichnenden) Antriebsstange zu rotieren (die dazu eingerichtet sein kann, ihrerseits bewegt zu werden, beispielsweise um eine weitere Rotationsachse zu rotieren). Das Bearbeitungswerkzeug kann zum Beispiel ein Schneebesen, ein Knethaken, ein Stampfer, ein Pürierelement, ein Schneid- oder Mahlwerkzeug oder ähnliches sein.

Gemäß einer vorteilhaften Ausführungsform weist ein erfindungsgemäßes Bearbeitungswerkzeug ein an die Antriebsstange angeformtes (relativ zur Antriebsstange also fixes) Verdickungselement auf; ein derartiges Verdickungselement kann insbesondere monolithisch mit der Antriebsstange und/oder aus Metall ausgebildet sein.

In einem bestimmungsgemäßen Verwendungszustand des Bearbeitungswerkzeugs (wenn also insbesondere der (ggf. lösbare) Schmutzschutzkragen die Antriebsstange verdreh- und/oder verschwenkbar umgibt und ein Einsteck-Ende der Antriebsstange in eine Einstecköffnung der Küchenmaschine eingesteckt ist), ist mindestens ein Abschnitt des Verdickungselements innerhalb des Schmutzschutzkragens angeordnet, also von diesem umgeben.

Das Verdickungselement schließt somit den Durchlass des Schmutzschutzkragens vom zweiten Rand her ab und verhindert so ein Eindringen von Spritzern, Teilen oder Partikeln in den Schmutzschutzkragen und damit auch in die Einstecköffnung.

Gemäß einer vorteilhaften Ausführungsform ist das Bearbeitungswerkzeug ein Rotationswerkzeug und ist das Verdickungselement mindestens in einem Abschnitt, vorzugsweise in einem vorgesehenen Kontaktbereich zum Schmutzschutzkragen im Wesentlichen rotationssymmetrisch zur Rotationsachse der Antriebsstange ausgebildet, beispielsweise im Wesentlichen kegel- oder kugelförmig. Bevorzugtermaßen nimmt dabei ein (bezogen auf die Antriebsstange) radialer Durchmesser des Verdickungselements (mindestens im Kontaktbereich) zu oder ab. Dies ermöglicht insbesondere auch dann effektiv ein Eindringen von Verschmutzungen in den Schmutzschutzkragen und damit auch in die Einstecköffnung, wenn die Rotationsachse der Antriebstange bei ihrer Verwendung bewegt wird, beispielsweise um einen Winkel verschwenkt oder um eine weitere (vorzugsweise nicht zur Rotationsachse der Antriebsstange parallele) Rotationsachse rotiert wird.

Gemäß einer vorteilhaften Ausführungsform eines erfindungsgemäßen Bearbeitungswerkzeugs mit Verdickungselement ist die Antriebsstange dazu eingerichtet (bzw. geeignet), um ihre eigene Längsachse und (vorzugsweise zugleich) um eine weitere Rotationsachse zu rotieren. Das Verdickungselement ist dabei um einen Schnittpunkt der Antriebsstange mit der (vorgesehenen) weiteren Rotationsachse herum angeordnet. Eine derartige Ausführungsform ermöglicht eine besonders gute Abdichtung, weil die Position des Verdickungselements während der Rotationen im Wesentlichen ortsfest (relativ zur Küchenmaschine) bleibt.

Vorteilhaft ist insbesondere eine Ausführungsform eines erfindungsgemäßen Bearbeitungswerkzeugs mit Verdickungselement, bei der die Antriebsstange ein Verdickungselement sowie der Schmutzschutzkragen wie oben beschrieben einen Griff und an einer inneren Oberfläche eine Rippe aufweisen. Das Verdickungselement ist dabei vorzugsweise dazu eingerichtet, in einem bestimmungsgemäßen Verwendungszustand des Bearbeitungswerkzeugs bei Betätigung des Griffs des Schmutzschutzkragens als Hebelachse zu wirken, so dass die Rippe gegen eine Oberfläche der Küchenmaschine gedrückt wird, bis das Verdickungselement in entgegengesetzter Richtung nachgibt. So kann auf einfache Weise damit das Einsteck-Ende der Antriebsstange aus der Einstecköffnung gezogen werden.

Gemäß einer bevorzugten Ausführungsform eines erfindungsgemäßen Bearbeitungswerkzeugs mit Verdickungselement ist dieses dazu eingerichtet ist, den Schmutzschutzkragen bei einer bestimmungsgemäßen Verwendung des Bearbeitungswerkzeugs in einer Position zu halten, in der ein Spalt zwischen einer Oberfläche der Küchenmaschine und dem Schmutzschutzkragen eine Breite von höchstens 3mm, bevorzugter höchstens 2mm oder sogar höchstens 1 mm aufweist: Ein Abstand zwischen einem Einsteck-Ende der Antriebsstange und dem Verdickungselement ist also an einen Aufnahmebereich für das Einsteck-Ende im Inneren der Küchenmaschine und die Abmessung des Schmutzschutztrichters entsprechend angepasst. Der Schmutzschutzkragen liegt somit in der genannten Position im Wesentlichen an der Oberfläche der Küchenmaschine an. Dadurch wird auf einfache Weise verhindert, dass Spritzer oder Partikel am Schmutzschutztrichter vorbei in die Einstecköffnung in der Oberfläche der Küchenmaschine geraten.

Eine erfindungsgemäße Küchenmaschine umfasst mindestens ein erfindungsgemäßes Bearbeitungswerkzeug gemäß einer der in dieser Schrift offenbarten Ausführungsformen und eine Einstecköffnung für das Bearbeitungswerkzeug, in die also ein Einsteck-Ende der Antriebsstange des Bearbeitungswerkzeugs eingesteckt werden kann. Das mindestens eine Bearbeitungswerkzeug kann beispielsweise mindestens ein/en Schneebesen, Knethaken, Stampfer, Schneidwerkzeug, Mahlwerkzeug und/oder Pürierelement umfassen.

Die Küchenmaschine kann an einer die Einstecköffnung umgebenden Oberfläche mindestens ein Befestigungsmittel zur lösbaren Befestigung des Schmutzschutzkragens aufweisen. Ein derartiges Befestigungsmittel kann beispielsweise einen Klemmrand mit einem flexiblen und/oder elastischen Material, eine Einschiebeschiene und/oder ein Gewinde umfassen, und es kann vorzugsweise dazu eingerichtet sein, zur Befestigung mit einem Gegenelement am Schmutzschutzkragen (insbesondere an einem ersten Rand des Schmutzschutzkragens wie oben beschrieben) zusammenzuwirken.

Vorzugsweise weist die Küchenmaschine einen Elektromotor auf, der dazu eingerichtet ist, die Antriebsstange des Bearbeitungswerkzeugs in dessen bestimmungsgemäßem Verwendungszustand anzutreiben.

Gemäß einer vorteilhaften Ausführungsform ist die Küchenmaschine dazu eingerichtet, das mindestens eine Bearbeitungswerkzeug - entsprechend einer jeweiligen Einstellung (z. B. durch einen Verwender) - in einfacher Rotation (um eine feste Rotationsachse) oder in mehrfacher Rotation (mit mindestens einer wiederum rotierenden Rotationsachse), in exzentrischer Bewegung (z.B. entlang einer Ellipse oder eines Dreiecks), in einer Verschwenkung (hin und her), in linearer Bewegung (z.B. weiter in die Küchenmaschine hinein und wieder aus ihr heraus) und/oder in mindestens einer Kombinationen dieser Bewegungen anzutreiben.

Vorzugsweise weist das mindestens eine Bearbeitungswerkzeug bei einer eine mehrfache Rotation ermöglichenden Ausführungsform einer erfindungsgemäßen Küchenmaschine ein Verdickungselement auf, das - wie oben beschrieben - bei einer bestimmungsgemäßen Verwendung in einem Schnittpunkt der mindestens zwei Rotationsachsen bzw. um einen solchen Schnittpunkt herum angeordnet ist: Das Verdickungselement bleibt damit während der Rotationen im Wesentlichen ortsfest gegenüber der Küchenmaschine, was eine besonders gute Abdichtung ermöglicht.

Im Folgenden werden bevorzugte Ausführungsbeispiele der Erfindung anhand von Zeichnungen näher erläutert. Es versteht sich, dass einzelne Elemente und Komponenten auch anders kombiniert werden können als dargestellt. Bezugszeichen für einander entsprechende Elemente sind figurenübergreifend verwendet und werden ggf. nicht für jede Figur neu beschrieben.

Es zeigen schematisch:
- Figur 1a:: einen exemplarischen erfindungsgemäßen Schmutzschutzkragen;
- Figur 1b:: den Schmutzschutzkragen gemäß Figur 1a zusammen mit einem Verdickungselement eines exemplarischen Bearbeitungswerkzeugs;
- Figur 2a:: ein Bearbeitungswerkzeug mit Schmutzschutzkragen gemäß einem ersten Ausführungsbeispiel der vorliegenden Erfindung;
- Figur 2b:: ein Bearbeitungswerkzeug mit Schmutzschutzkragen gemäß einem zweiten Ausführungsbeispiel der vorliegenden Erfindung; und
- Figur 3:: eine erfindungsgemäße Küchenmaschine mit einem Bearbeitungswerkzeug gemäß einer exemplarischen Ausführungsform der vorliegenden Erfindung.

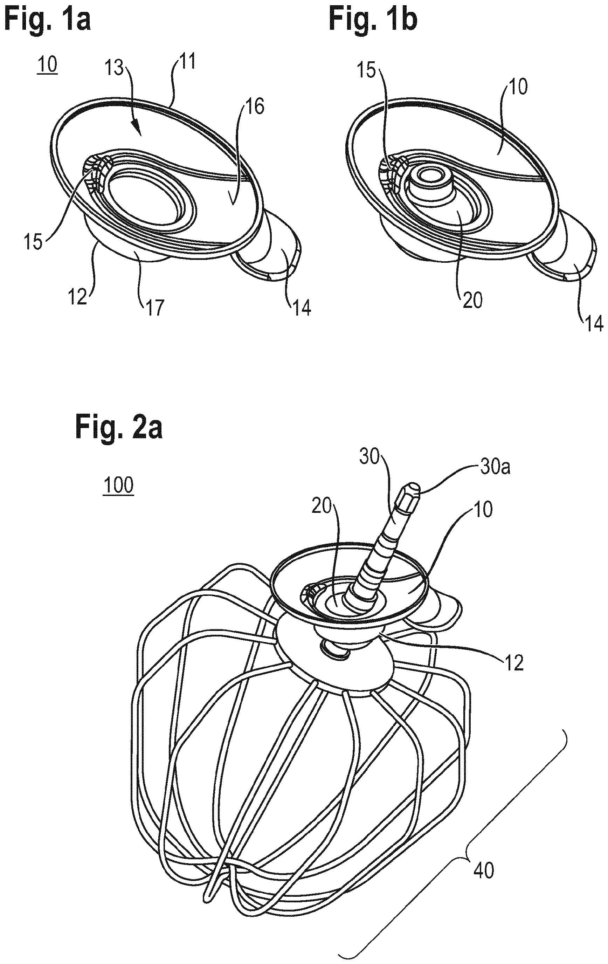

In den Figuren 1a und 1b ist vereinfacht ein exemplarischer Schmutzschutzkragen 10 gemäß einer Ausführungsform der vorliegenden Erfindung dargestellt. In Figur 1b ist dabei zusätzlich ein Verdickungselement 20 eines (ansonsten nicht dargestellten) Bearbeitungswerkzeugs gezeigt.

Der Schmutzschutzkragen 10 bildet zwischen einem ersten Rand 11 und einem zweiten Rand 12 einen Durchlass 13 aus, durch die eine Antriebsstange eines Bearbeitungswerkzeugs hindurchgeführt werden kann (nicht gezeigt). Vom ersten Rand 11 zum zweiten Rand 12 verengt sich der Durchlass 13 trichterartig, wobei die Verengung in einem Bereich 16 streng monoton erfolgt. Eine Wandung des Schmutzschutzkragens verläuft in diesem Bereich 16 im Wesentlichen entlang einer Kegelmantelfläche; an den Bereich 16 diesen schließt sich ein zylindrischer Bereich 17 an.

Der gezeigte Schmutzschutzkragen 10 weist zudem im Bereich einer Peripherie des ersten Randes einen als Lasche ausgebildeten Griff 14 auf sowie an einer inneren Oberfläche und dem Griff 14 (bezogen auf den Durchlass des Schmutzschutzkragens) gegenüber eine Rippe 15. Die Rippe erhebt sich keilartig in einen Innenbereich (also in das Innere) des Schmutzschutzkragens hinein; in Verbindung mit dem in Figur 1b gezeigten Verdickungselement 20 eines exemplarischen erfindungsgemäßen Bearbeitungswerkzeugs bilden Griff 14 und Rippe 15 einen Hebel aus, für den das Verdickungselement 20 als Hebelachse dient.

Die Rippe ist dabei dazu eingerichtet, gegen die Oberfläche der Küchenmaschine zu drücken, wenn das Bearbeitungswerkzeug bestimmungsgemäß an dieser montiert ist und der Griff 14 in entgegengesetzter Richtung abgezogen wird. Damit wird das Verdickungselement als Hebelachse von der Oberfläche der Küchenmaschine weggedrückt, was ein vereinfachtes Abnehmen des (ansonsten nicht gezeigten) Bearbeitungswerkzeugs von der Küchenmaschine ermöglicht.

Wie in derFigur 1b zu erkennen, ist ein Abschnitt (vorliegend der überwiegende Teil) des Verdickungselements 20 innerhalb des Schmutzschutzkragens angeordnet, also von diesem umgeben. Dadurch wird eine besonders gute Abdichtung im Übergangsbereich und damit im Verwendungszustand ein besonders effektiver Schutz der Einstecköffnung erreicht.

In Figur 2a ist ein erfindungsgemäßes Bearbeitungswerkzeug 100 dargestellt, das im vorliegenden Beispiel als Rotationswerkzeug, insbesondere als ein Quirl ausgebildet ist. Das Bearbeitungswerkzeug 100 umfasst eine Antriebsstange (bzw. Welle) 30 mit einem Einsteck-Ende 30a, das dazu eingerichtet ist, in eine geeignete Einstecköffnung an einer Küchenmaschine eingesteckt zu werden (nicht dargestellt).

Am dem Einsteck-Ende 30a gegenüberliegenden Ende der Antriebsstange 30 ist ein Bearbeitungsabschnitt 40 zum Durchrühren von Lebensmitteln angeordnet.

An die Antriebsstange 30 (vorzugsweise monolithisch) angeformt ist ein Verdickungselement 20; insbesondere können Antriebsstange und Verdickungselement im Wesentlichen aus einem Metall geformt (beispielsweise in einem spanabtragenden Verfahren hergestellt) sein. Ein Abschnitt des Verdickungselements 20 ist - wie mit Bezug zu Figur 1b beschrieben - vom Schmutzschutzkragen umgeben, also innerhalb des Schmutzschutzkragens angeordnet.

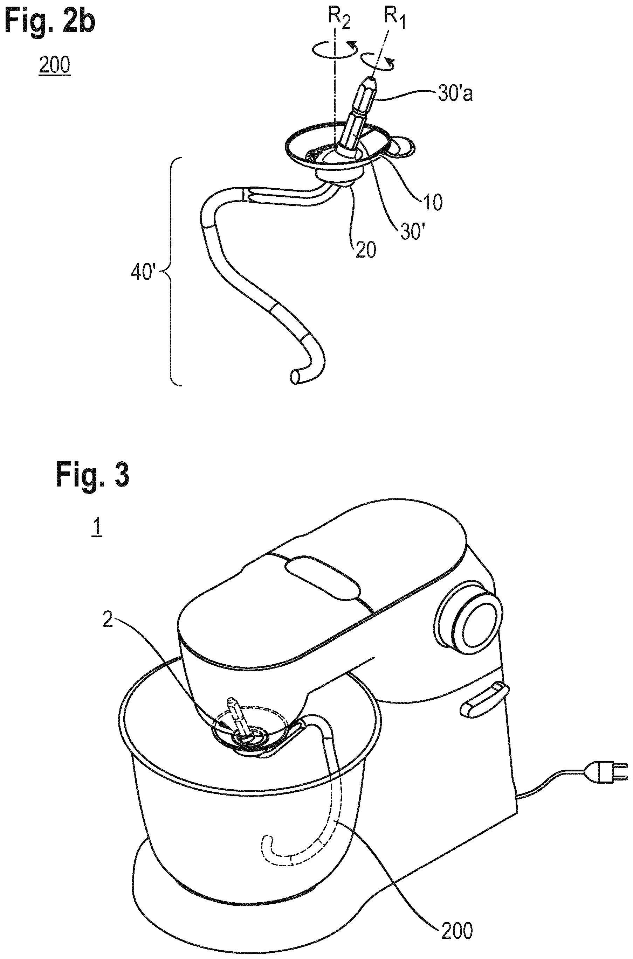

In Figur 2b ist ein erfindungsgemäßes Bearbeitungswerkzeug 200 gemäß einer anderen exemplarischen Ausführungsform gezeigt, das ebenfalls ein Rotationswerkzeug, nämlich ein Knethaken ist. Das Bearbeitungswerkzeug umfasst eine Antriebsstange (bzw. Welle) 30' mit einem Einsteck-Ende 30'a, dem gegenüberliegend ein Bearbeitungsabschnitt 40' angeordnet ist.

An die Antriebsstange 30' ist ein Verdickungselement 20 angeformt, das - entsprechend dem oben Beschriebenen - in einem Abschnitt innerhalb des Schmutzschutzkragens 10 angeordnet ist (also einen innerhalb des Schmutzschutzkragens angeordneten Abschnitt umfasst).

In der Figur 2b ist zudem dargestellt, wie das Bearbeitungswerkzeug 200 vorteilhaft in einer geeigneten Küchenmaschine in Mehrfachrotation angetrieben werden kann: Die Antriebsstange 30' kann dabei um ihre eigene Rotationsachse R₁ rotieren, die ihrerseits um eine zweite Rotationsachse R₂ rotieren kann. Vorliegend schneiden sich die beiden Rotationsachsen, so dass die Antriebsstange 30' bei der Rotation um die zweite Rotationsachse R₂ entlang einer Kegelmantelfläche geführt wird. Das Verdickungselement 20 ist dabei um den Schnittpunkt der beiden Rotationsachsen herum angeordnet. Dadurch bleibt die Position des Verdickungselements 20 während beider Rotationen ortsfest (relativ zur Küchenmaschine), was eine besonders gute Abdichtung ermöglicht (bei der insbesondere auch der das Verdickungselement einfassende Schmutzschutzkragen 10 ortsfest bleibt).

Wie in der Figur2b erkennbar ist, bietet der trichterförmige Durchlass des Schmutzschutzkragens Raum für die aus der Mehrfachrotation resultierende Neigung der Antriebsstange 30'. Der Schmutzschutzkragen ist daher für die Verwendung bei einer derartigen Mehrfachrotation geeignet.

Figur 3 zeigt schematisch eine exemplarische erfindungsgemäße Küchenmaschine 1 mit einer Einstecköffnung 2, in die ein Einsteck-Ende des in der Figur 2 dargestellten Bearbeitungswerkzeugs 200 eingesteckt ist. Die Küchenmaschine 1 ist dazu einrichtet, dieses Bearbeitungswerkzeug 200 in der beschriebenen Mehrfachrotation anzutreiben. Zur besseren Erkennbarkeit der Anordnung ist das Bearbeitungswerkzeug 200 dabei durch die übrigen Komponenten der Küchenmaschine hindurchscheinend dargestellt. Die Küchenmaschine 1 ist elektrisch zu betreiben, insbesondere umfasst sie einen Elektromotor (nicht dargestellt), der dazu eingerichtet ist, die Rotationen des Bearbeitungswerkzeugs 200 anzutreiben.

Ein erfindungsgemäßer Schmutzschutzkragen 10 dient dem Schutz einer Einstecköffnung einer Küchenmaschine für ein Bearbeitungswerkzeug 100, 200. Er ist mindestens in einem Abschnitt trichterartig ausgebildet und dazu eingerichtet, eine Antriebsstange 30, 30' des Bearbeitungswerkzeugs verdreh- und/oder verschwenkbar zu umgeben.

Ein erfindungsgemäßes Bearbeitungswerkzeug 100, 200 für eine Küchenmaschine umfasst eine Antriebsstange 30, 30' und einen Schmutzschutzkragen 10. Eine erfindungsgemäße Küchenmaschine 1 umfasst mindestens ein Bearbeitungswerkzeug 100, 200 und eine Einstecköffnung 2 für das mindestens eine Bearbeitungswerkzeug.

### Bezugszeichen

- 1: Küchenmaschine
- 2: Einstecköffnung

- 10: Schmutzschutzkragen
- 11: erster Rand
- 12: zweiter Rand
- 13: Durchlass
- 14: Griff
- 15: Rippe
- 16: Bereich mit kegelartiger Oberfläche
- 17: zylindrischer Bereich

- 20: Verdickungselement
- 30, 30`: Antriebsstange
- 30a, 30'a: Einsteck-Ende
- 40, 40`: Bearbeitungsabschnitt

- 100,200: Bearbeitungswerkzeug

- R₁: erste Rotationsachse
- R₂: zweite Rotationsachse

## Patentansprüche

1. Schmutzschutzkragen (10) zum Schutz einer Einstecköffnung einer Küchenmaschine für ein Bearbeitungswerkzeug, wobei der Schmutzschutzkragen mindestens in einem Abschnitt trichterartig ausgebildet und dazu eingerichtet ist, eine Antriebsstange des Bearbeitungswerkzeugs verdreh- und/oder verschwenkbar zu umgeben.

2. Schmutzschutzkragen gemäß Anspruch 1, wobei der Schmutzschutzkragen einen ersten (11) und einen zweiten Rand (12) aufweist, wobei der erste Rand (11)
- dazu eingerichtet ist, im Betrieb an einer Oberfläche der Küchenmaschine anzuliegen; und/oder
- einen Durchmesser hat, der mindestens doppelt so groß, bevorzugt mindestens 2,5mal so groß ist wie ein Durchmesser des zweiten Randes.

3. Schmutzschutzkragen gemäß einem der Ansprüche 1 oder 2, wobei der Schmutzschutzkragen einen Griff (14) und an einer inneren Oberfläche eine Rippe (15) aufweist, die sich keilartig in einen Innenbereich des Schmutzschutzkragens hinein erhebt.

4. Bearbeitungswerkzeug (100,200) für eine Küchenmaschine, das eine Antriebsstange (30, 30') und einen Schmutzschutzkragen (10) gemäß einem der vorhergehenden Ansprüche umfasst.

5. Bearbeitungswerkzeug gemäß Anspruch 4, das ein an die Antriebsstange (30,30') angeformtes Verdickungselement (20) umfasst, das dazu eingerichtet ist, in einem bestimmungsgemäßen Verwendungszustand mindestens in einem Abschnitt innerhalb des Schmutzschutzkragens (10) angeordnet zu sein.

6. Bearbeitungswerkzeug gemäß Anspruch 5, wobei der Schmutzschutzkragen (10) gemäß Anspruch 3 ausgebildet ist , wobei die Rippe (15) des Schmutzschutzkragens dazu eingerichtet ist, in einem bestimmungsgemäßen Verwendungszustand des Bearbeitungswerkzeugs bei Betätigung des Griffs (14) gegen eine Oberfläche des Küchenmaschine zu drücken.

7. Bearbeitungswerkzeug gemäß einem der Ansprüche 5 oder 6, wobei das Verdickungselement (20) mindestens abschnittsweise kegel- oder kugelförmig ausgebildet ist.

8. Bearbeitungswerkzeug gemäß einem der Ansprüche 5 bis 7, wobei das Verdickungselement (20) dazu eingerichtet ist, den Schmutzschutzkragen (10) bei einer bestimmungsgemäßen Verwendung des Bearbeitungswerkzeugs in einer Position zu halten, in der ein Spalt zwischen einer Oberfläche der Küchenmaschine und dem Schmutzschutzkragen (10) eine Breite von höchstens 3mm, bevorzugter 2mm oder sogar höchstens 1 mm hat.

9. Küchenmaschine mit mindestens einem Bearbeitungswerkzeug gemäß einem der Ansprüche 4 bis 8 sowie mit einer Einstecköffnung (2) für das mindestens eine Bearbeitungswerkzeug (100, 200).

10. Küchenmaschine gemäß Anspruch 9, die dazu eingerichtet ist, das mindestens eine Bearbeitungswerkzeug (100, 200) in einfacher Rotation, in mehrfacher Rotation, in exzentrischer Bewegung, in einer Verschwenkung, in linearer Bewegung und/oder in mindestens einer Kombination dieser Bewegungen anzutreiben.
